# EUROPEAN PATENT APPLICATION

(11) **EP 4 475 385 A1**
(43) Date of publication of application: **11.12.2024**
(21) Application number: 22924940.4
(22) Date of filing: 31.10.2022
(51) Int. Cl.: H02J 7/04, B60L 58/27, H01M 10/615, H01M 10/625, H01M 10/6563, H01M 10/667, H02J 7/00, H02J 7/10

(54) **ELECTRIC WORK VEHICLE**

(30) Priority: 03.02.2022 JP 2022015811
(71) Applicant: Kubota Corporation, Osaka 556-8601 (JP)
(72) Inventor: AOKI, Keita, Sakai-shi, Osaka 590-0908 (JP); OKAZAKI, Kazuto, Sakai-shi, Osaka 590-0908 (JP); TAMBA, Daiki, Sakai-shi, Osaka 590-0908 (JP); TAKASE, Shunya, Sakai-shi, Osaka 590-0908 (JP)
(74) Representative: Müller-Boré & Partner Patentanwälte PartG mbB
(86) International application number: PCT/JP2022/040738
(87) International publication number: WO 2023/149035

(57) **Abstract**

An electric work vehicle includes an electric motor M configured to drive a vehicle body to travel, a battery 4 chargeable by an external power supply device and configured to supply driving electric power to the electric motor M, a connection section 37 to which a power supply connector 36 of the power supply device is connectable, a control device 34 configured to control the charge state during charging by the power supply device KD, and a temperature detecting means 40 configured to detect the temperature of the battery 4. The control device 34 is configured to execute temperature increase control to warm the battery 4 until the temperature of the battery 4 increases to a target temperature prior to charging the battery 4, in response to the temperature of the battery 4 detected by the temperature detecting means 40 being not higher than a set temperature.

## Description

### Technical Field

The present invention relates to an electric work vehicle including an electric motor configured to drive a vehicle body to travel and a battery for supplying driving electric power to the electric motor.

### Background Art

In an electric work vehicle of this type, when electric power is consumed from a battery, the battery is charged from an external power supply device connected to the battery via a connector for connection, as described in Patent Document 1, for example. When charging the battery, the external power supply device is connected to the battery, and charging is performed immediately after a command to start charging is given.

### Prior Art Document

### Patent Document

Patent Document 1: JP 2021-957A

### Disclosure of the Invention

### Problem to be Solved by the Invention

For example, a high-capacity lithium ion battery or the like is used as the above battery. Such battery is easily affected by temperature and have the characteristic that the lower the temperature, the lower the maximum charging current that can be applied to the battery during charging.

When an electric work vehicle is used in a cold region, the ambient temperature may be as low as, for example, 10 degrees or more below zero at the start of a battery charging process. In such a low-temperature environment, the maximum charging current that can be applied to the battery is reduced to a lower value compared to when in an environment at a normal temperature.

Conventionally, when charging a battery when the ambient temperature is low, the charging process is performed immediately after a command to start charging is given after an external power supply device is connected to the battery. Accordingly, the charging current is low, which requires a long charging time.

Therefore, there is a demand for ensuring that the battery can be efficiently charged even when the ambient temperature is low.

### Means for Solving Problem

An electric work vehicle according to the present invention has a characteristic configuration including: an electric motor configured to drive a vehicle body to travel; a battery chargeable by an external power supply device and configured to supply driving electric power to the electric motor; a connection section to which a power supply connector of the power supply device is connectable; a control device configured to control a charge state during charging by the power supply device; and a temperature detecting means configured to detect a temperature of the battery, wherein the control device is configured to execute temperature increase control to warm the battery until the temperature of the battery increases to a target temperature prior to charging the battery, in response to the temperature of the battery detected by the temperature detecting means being not higher than a set temperature.

According to the present invention, when charging the battery when the temperature of the battery is not higher than the set temperature, the control device executes the temperature increase control to warm the battery until the temperature of the battery increases to a target temperature prior to charging.

After the temperature of the battery has increased to the target temperature or higher due to the temperature increase control, the battery is charged by the power supply device while the control device controls the charge state during this charging by the power supply device. With the thus increased temperature of the battery, the maximum charging current that can be applied to the battery is higher compared to when the battery temperature is low.

Therefore, even when the ambient temperature is low, high charging current can be applied to the battery immediately after the start of charging, which reduces the time required to fully charge the battery, enabling efficient charging of the battery.

In the present invention, it is preferable that the control device is configured to drive the electric motor to rotate during the temperature increase control.

With this configuration, the control device drives the electric motor to rotate by supplying driving electric power from the battery to the electric motor. At this time, current for driving the electric motor flows from the battery to the electric motor, and Joule heat produced due to the passage of current can increase the temperature of the battery.

In the present invention, it is preferable that the electric work vehicle includes a power takeoff shaft driven by motive power supplied from the electric motor and configured to output motive power to an external device, wherein the control device is configured to drive the power takeoff shaft to rotate using the motive power supplied from the electric motor during the temperature increase control.

With this configuration, not only the electric motor is rotated, but also the power takeoff shaft is driven to rotate by motive power supplied from the electric motor, and therefore, higher driving current is supplied from the battery to the electric motor compared to when only the electric motor is driven. This results in a higher amount of heat production, which can accelerate the increase in the battery temperature.

In the present invention, it is preferable that the electric work vehicle includes a hydraulic continuously variable transmission device configured to change speed of motive power supplied from the electric motor and transmit the motive power to a vehicle body travel device, wherein the control device is configured to operate the hydraulic continuously variable transmission device using the motive power supplied from the electric motor during the temperature increase control.

With this configuration, not only the electric motor is rotated, but also the hydraulic continuously variable transmission device is operated by motive power supplied from the electric motor, and therefore, higher driving current is supplied from the battery to the electric motor compared to when only the electric motor is driven. This results in a higher amount of heat production, which can accelerate the increase in the battery temperature.

In the present invention, it is preferable that the electric work vehicle includes an inverter configured to convert DC power supplied from the battery to AC power and supply the AC power to the electric motor; a radiator configured to cool a coolant circulating through cooling paths provided in the electric motor and the inverter; and a blower fan configured to blow air onto the radiator, wherein the control device is configured to operate the blower fan to ventilate the battery by directing cooling air passing through the radiator toward the battery during the temperature increase control.

When the electric work vehicle performs work, DC power supplied from the battery is converted to AC power by the inverter, and the AC power is supplied to the electric motor to drive the electric motor. At this time, heat is produced in the electric motor and the inverter due to the passage of current. Therefore, to reduce the temperatures of the electric motor and the inverter, the blower fan is used to blow air onto the radiator, through which the coolant circulating through the cooling paths in the electric motor and the inverter flows.

When the ambient temperature is low and the battery is charged a certain time interval after the electric work vehicle has performed the work, the battery temperature may decrease due to the influence of the ambient temperature.

Therefore, with this configuration, the heat from the coolant in the radiator, in which the coolant is still at an increased temperature due to heating, is used to heat the battery and increase the temperature thereof.

Accordingly, the battery temperature can be increased by effectively using heat produced in the inverter and the electric motor during work.

### Brief Description of the Drawings

FIG. 1 is a left side view of a tractor.
FIG. 2 is a left side view showing an arrangement of an inverter and the like.
FIG. 3 is a diagram showing a flow of motive power transmission.
FIG. 4 is a block diagram showing a configuration for charging.
FIG. 5 is a flowchart of control operations.
FIG. 6 is a diagram showing a cooling mechanism.

### Best Mode for Carrying out the Invention

An embodiment of the present invention will be described based on the drawings. In the following description, unless otherwise stated, the direction of an arrow F and the direction of an arrow B in the drawings will be respectively referred to as "the front side" and "the rear side", and the direction of an arrow L and the direction of an arrow R in the drawings will be respectively referred to as "the left side" and "the right side". Also, the direction of an arrow U and the direction of an arrow D in the drawings will be respectively referred to as "the upper side" and "the lower side".

### Overall Configuration of Tractor

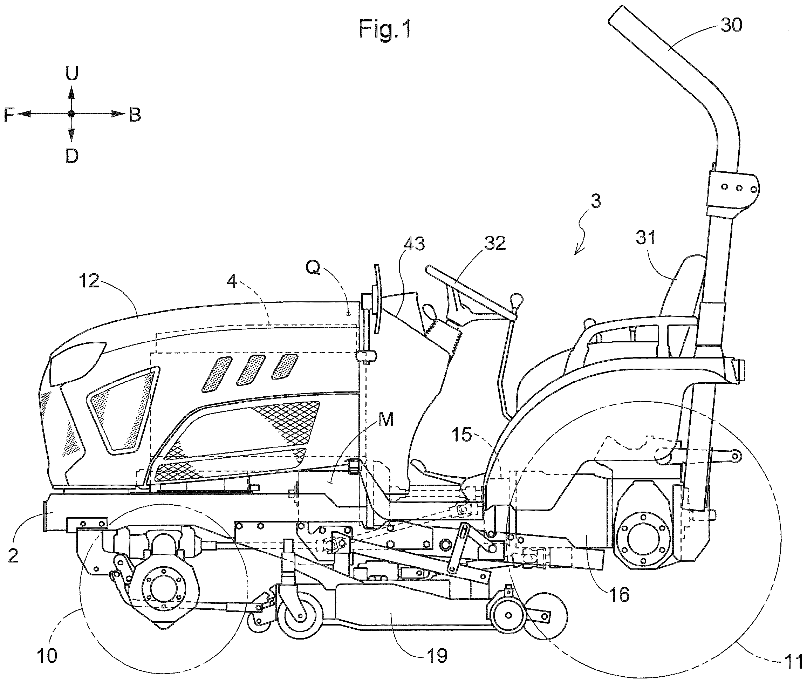

The following describes a tractor as an example of an electric work vehicle according to the present invention. As shown in FIG. 1, the tractor includes left and right front wheels 10 and left and right rear wheels 11, which constitute a vehicle body travel device, as well as a cover member 12.

The tractor includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit in the driver's seat 31. Accordingly, the operator can get on the driving section 3. The operator steers the left and right front wheels 10 by operating the steering wheel 32. The operator can perform various driving operations in the driving section 3.

The tractor includes a battery 4 for traveling. The cover member 12 is configured to be pivotable about an opening and closing axis Q extending in the left-right direction of the body. Accordingly, the cover member 12 is configured to be openable and closable. When the cover member 12 is closed, the battery 4 for traveling is covered by the cover member 12.

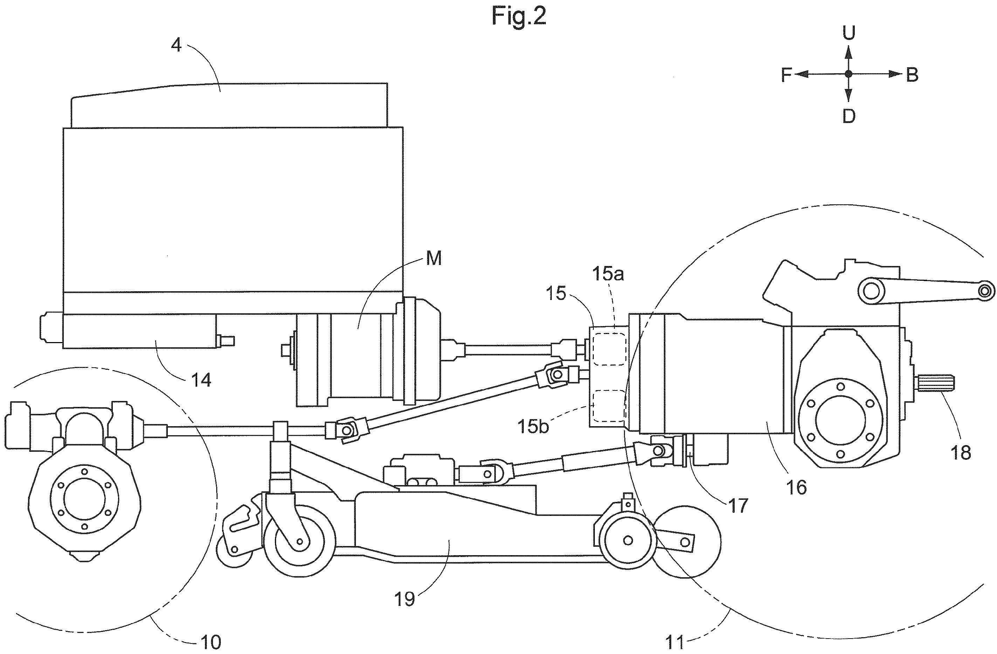

As shown in FIG. 2, the tractor includes an inverter 14 and an electric motor M. The battery 4 for traveling supplies electric power to the inverter 14. The inverter 14 converts DC power supplied from the battery 4 for traveling to AC power, and supplies the AC power to the electric motor M. The electric motor M is driven by the AC power supplied from the inverter 14.

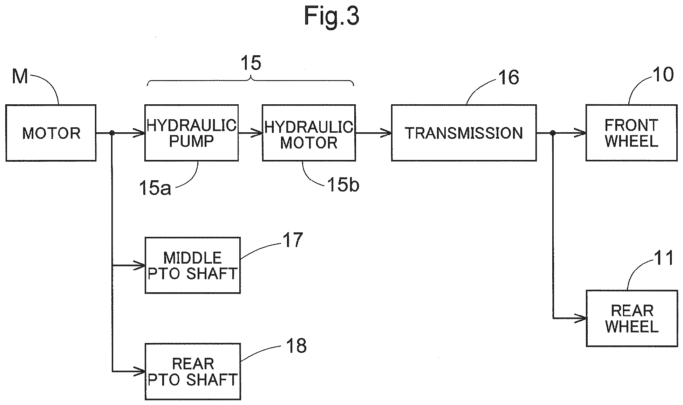

As shown in FIGS. 2 and 3, the tractor includes a hydraulic continuously variable transmission device 15 and a transmission 16. As shown in FIG. 3, the hydraulic continuously variable transmission device 15 includes a hydraulic pump 15a and a hydraulic motor 15b.

The hydraulic pump 15a is driven by rotational motive power transmitted from the electric motor M. As a result of the hydraulic pump 15a being driven, rotational motive power is output from the hydraulic motor 15b. The hydraulic continuously variable transmission device 15 is configured to change the speed of rotational motive power between the hydraulic pump 15a and the hydraulic motor 15b. Also, the hydraulic continuously variable transmission device 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes power takeoff shafts, a middle PTO shaft 17 and a rear PTO shaft 18. Rotational motive power output from the electric motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device as an external device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Configuration Related to Motor Control

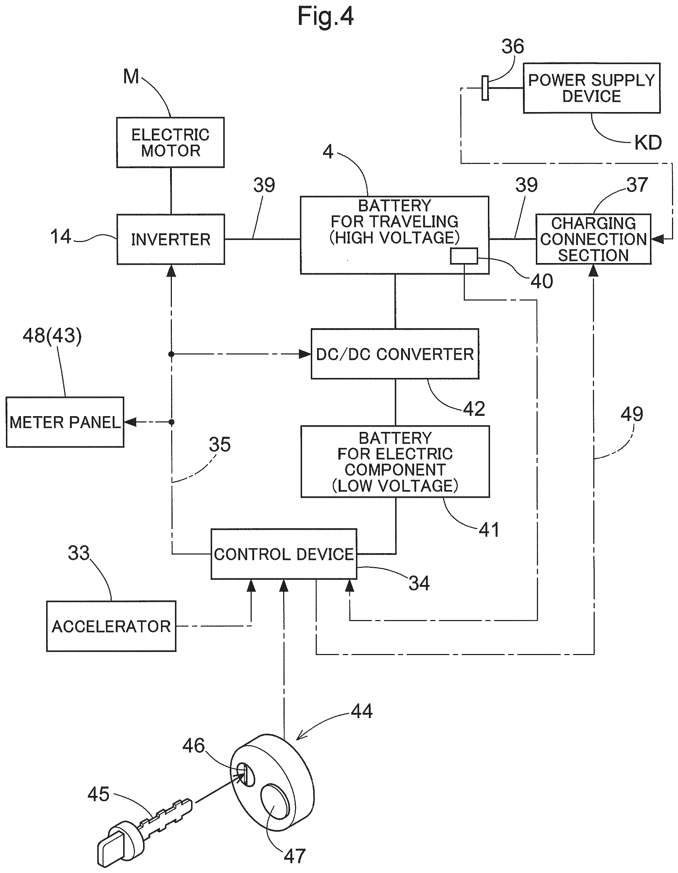

As shown in FIG. 4, a configuration related to the control of the electric motor M includes an accelerator 33, a control device 34 configured to control the operation of the electric motor M, and the inverter 14. The accelerator 33 is in the vicinity of the steering wheel 32. Although not shown, the accelerator 33 includes a pivotable lever and a potentiometer configured to be operated by pivoting the lever. The accelerator 33 is connected to the control device 34. The control device 34 is connected to the inverter 14 via a signal harness 35. The control device 34 is configured to issue a command to the inverter 14 in response to a command from the accelerator 33. The inverter 14 is configured to control the output of the electric motor M by adjusting electric power supplied to the electric motor M from the battery 4 for traveling, according to the command from the control device 34.

### Configuration Related to Charging

As shown in FIG. 4, the battery 4 for traveling is chargeable by an external power supply device KD. The tractor includes a charging connection section 37 to which a power supply connector 36 of the power supply device KD is connectable. The charging connection section 37 is inside the cover member 12 and is configured to be exposed to the outside when the cover member 12 is pivoted open. The control device 34 is configured to control the operation of the electric motor M and to control the charge state during charging by the power supply device KD.

The charging connection section 37 is in conformity with commonly used standard specifications. The battery 4 for traveling is charged via an electric power supply line 39 while the power supply connector 36 is connected to the charging connection section 37. The battery 4 for traveling supplies high-voltage (e.g., several tens to several hundreds of volts) electric power to the inverter 14 and the electric motor M for traveling via the electric power supply line 39.

The battery 4 for traveling uses, for example, a lithium ion battery and has a configuration in which a large number of small-sized low-voltage unit cells, which are not shown, are stacked, and the exterior of the stack is covered by and enclosed in a housing in a sealed state. Therefore, heat is likely to be trapped in the battery, and once the internal temperature of the battery increases, the temperature is unlikely to decrease. To address this issue, the battery 4 for traveling includes a temperature sensor 40 as a temperature detecting means configured to detect the internal temperature of the battery. Information detected by the temperature sensor 40 is input to the control device 34.

In addition to the battery 4 for traveling, the tractor includes a battery 41 for electric components for supplying electric power to the control device 34 and other electric components. The battery 41 for electric components supplies low-voltage (12 V) electric power in order to drive the electric components. The battery 41 for electric components is charged using electric power supplied from the battery 4 for traveling via a DC/DC converter 42.

The driving section 3 includes a switching operation unit 44 serving as a start command means capable of switching the control device 34 between an operable state and an inactive state. The switching operation unit 44 includes an insertion slot 46 as a securing portion where a portable operation key 45 can be inserted and secured, and a manually-pressable push-button switch 47. The control device 34 can be switched from the inactive state to the operable state by the switch 47 being pressed while the operation key 45 is inserted and secured in the insertion slot 46. Like an ordinary key for a vehicle, the operation key 45 functions as a key that can be identified only by this specific work vehicle.

The operation panel 43 includes a meter panel 48 configured to display, for example, traveling conditions of the vehicle body, working conditions, battery information (amount of charge and temperature), and the like. The meter panel 48 is connected the control device 34, and the control device 34 controls the operation of the meter panel 48.

The control device 34, the inverter 14, the battery 4 for traveling (including the temperature sensor 40), the DC/DC converter 42, the meter panel 48, the charging connection section 37, and the like are connected via the CAN (Controller Area Network) type signal harness 35 so as to communicate data. The control device 34 communicates with the charging connection section 37 via a charging communication harness 49, and information on whether or not the power supply connector 36 is connected to the charging connection section 37, information on a charging current required by the work vehicle, and the like are transmitted therebetween. The charging connection section 37 and the power supply device KD are also configured such that signals can be communicated therebetween. Furthermore, information on the operation performed on the switching operation unit 44 is input to the control device 34.

### Control for Charging

The control device 34 switches to a charge mode when it is switched to the operable state while the power supply connector 36 is connected to the charging connection section 37. In the charge mode, the control device 34 is configured to charge the battery 4 for traveling using the power supply device KD.

The control device 34 is configured to execute temperature increase control to warm the battery 4 for traveling until the temperature of the battery 4 for traveling increases to a target temperature Tm prior to charging the battery 4 for traveling if the temperature of the battery 4 for traveling detected by the temperature sensor 40 is not higher than a set temperature Ts.

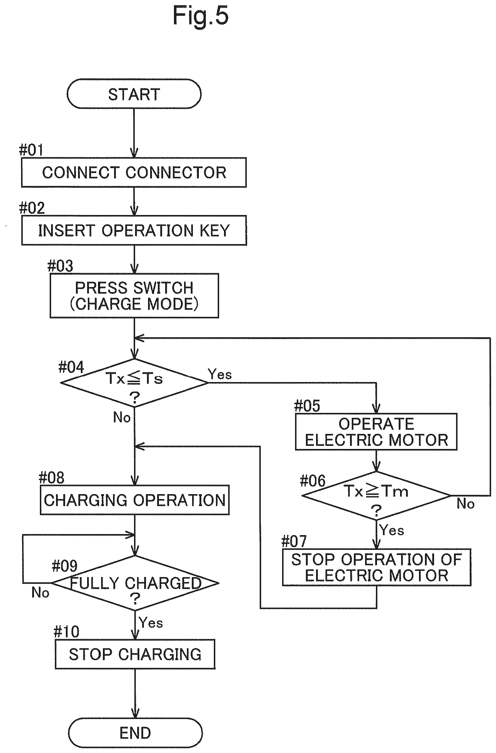

Hereinafter, charging control performed by the control device 34 will be more specifically described with reference to the flowchart in FIG. 5.

When charging the battery 4 for traveling, a worker connects the power supply connector 36 of the power supply device KD to the charging connection section 37. The worker then inserts and secures the operation key 45 in the insertion slot 46 of the switching operation unit 44 included in the driving section 3 and presses the switch 47. When the control device 34 recognizes this, it switches to the charge mode (steps #01, #02, and #03).

In the charge mode, whether or not the internal temperature, Tx, of the battery 4 for traveling detected by the temperature sensor 40 is not higher than the set temperature Ts is determined (step #04). At this time, if the internal temperature Tx of the battery 4 for traveling is higher than the set temperature Ts, a charging operation is started immediately (step #08), whereas if the temperature Tx of the battery 4 for traveling is not higher than the set temperature Ts, the electric motor M is driven to rotate to warm the battery 4 for traveling (step #05) before charging of the battery 4 for traveling is started.

More specifically, driving current is supplied to the electric motor M to cause current to pass through an internal resistance of the battery 4 for traveling, and the passage of the current produces Joule heat, which increases the temperature of the battery 4 for traveling. As the set temperature Ts, a specific temperature is set. If the actual temperature falls below this specific temperature, the current value that can be supplied would decrease to a very low value. For example, a low temperature below zero may be set as the set temperature Ts. The process in step #05 corresponds to the temperature increase control.

As described above, motive power from the electric motor M is transmitted to the hydraulic continuously variable transmission device 15, the middle PTO shaft 17, and the rear PTO shaft 18. When the electric motor M is driven to rotate in step #05, the motive power from the electric motor M drives the hydraulic continuously variable transmission device 15 to rotate, and the motive power from the electric motor M also drives the middle PTO shaft 17 and the rear PTO shaft 18 to rotate.

The operation of supplying driving current to the electric motor M to warm the battery 4 for traveling continues until the temperature of the battery 4 for traveling increases to the target temperature Tm (step #06). When the battery 4 for traveling increases to the target temperature Tm or higher, the operation of the electric motor M is stopped (step #07), and charging of the battery 4 for traveling from the power supply device KD is started (step #08).

The target temperature Tm may be any temperature at which the current value that can be supplied allows for efficient charging. More specifically, the target temperature Tm may be set to the same temperature as the set temperature Ts or may be lower or higher than the set temperature Ts.

After the charging operation is started, when the battery 4 for traveling is charged to a fully charged state, the charging operation is stopped (steps #09 and #10).

### Other Embodiments

(1) In the above-described embodiment, during the temperature increase control, motive power from the electric motor M is used to drive the hydraulic continuously variable transmission device 15 to rotate and also transmitted to the middle PTO shaft 17 and the rear PTO shaft 18. However, instead of this configuration, a configuration may be adopted in which motive power from the electric motor M is used to drive the hydraulic continuously variable transmission device 15 to rotate but is not transmitted to the middle PTO shaft 17 and the rear PTO shaft 18. Alternatively, a configuration may also be adopted in which motive power from the electric motor M is used to drive the middle PTO shaft 17 and the rear PTO shaft 18 to rotate but is not transmitted to the hydraulic continuously variable transmission device 15. Furthermore, a configuration may be adopted in which the electric motor M is driven to rotate, but motive power therefrom is not transmitted to the hydraulic continuously variable transmission device 15, the middle PTO shaft 17, and the rear PTO shaft 18.
(2) In the above-described embodiment, the electric motor M is configured to be driven to rotate during the temperature increase control. However, instead of or in addition to this configuration, the following configuration may be adopted.

That is, a configuration may be adopted in which the electric work vehicle includes a radiator 50 configured to cool a coolant circulating through cooling paths provided in the electric motor M and the inverter 14 as well as a blower fan 51 configured to blow air onto the radiator 50, and the control device 34 is configured to operate the blower fan 51 to ventilate the battery 4 for traveling by directing cooling air passing through the radiator 50 toward the battery 4 for traveling during the temperature increase control.

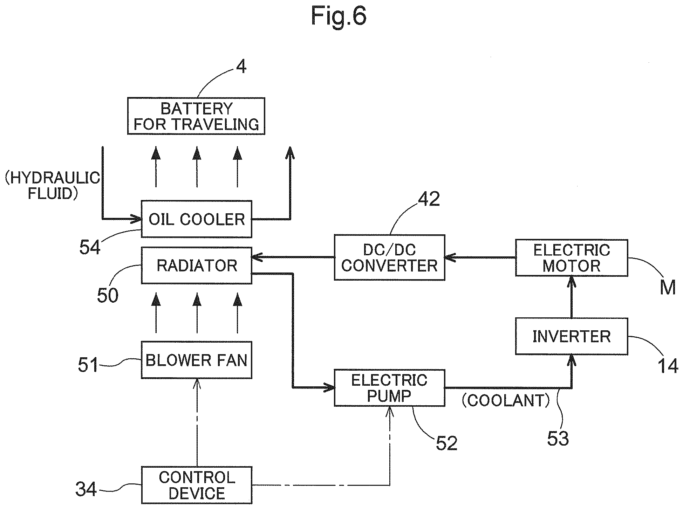

This work vehicle includes a cooling mechanism for cooling the electric motor M, the inverter 14, the DC/DC converter 42, and the like. As shown in FIG. 6, the cooling mechanism includes the radiator 50, an electric pump 52, and a coolant circuit 53. The electric motor M, the inverter 14, and the DC/DC converter 42 have cooling paths that are formed inside their respective casings, and the cooling paths are connected by piping to form the coolant circuit 53. The electric pump 52 circulates the coolant, and the coolant that has absorbed heat is cooled in the radiator 50 by the cooling action of the blower fan 51. Air supplied by the blower fan 51 also acts on an oil cooler 54. The oil cooler 54 cools a hydraulic fluid for the hydraulic continuously variable transmission device 15 and the like.

The radiator 50 and the oil cooler 54 are in front of the battery 4 for traveling, and air from the blower fan 51 passes through the radiator 50 and the oil cooler 54 before flowing toward the battery 4 for traveling.

When the ambient temperature is low, to prevent the temperature of the battery 4 for traveling from decreasing after work has been performed, the blower fan 51 is operated to ventilate the battery 4 for traveling by directing cooling air passing through the radiator 50 (i.e., warm air heated by the coolant) toward the battery 4 for traveling, and the temperature of the battery 4 for traveling can thereby be increased using the heat of the coolant.

(3) In the above-described embodiment, the electric motor M is configured to be driven to rotate during the temperature increase control. However, instead of or in addition to this configuration, a configuration may be adopted in which the electric work vehicle includes a dedicated heating means (e.g., a heater) configured to warm the battery 4 for traveling at a location near the battery 4 for traveling, and the heating means is operated during the temperature increase control.

(4) In the above-described embodiment, the control device 34 is configured to switch to the charge mode when it is switched to the operable state while the power supply connector 36 is connected to the charging connection section 37. However, instead of this configuration, the control device 34 may be configured to switch to the charge mode when the power supply connector 36 is connected to the charging connection section 37 after the control device 34 has been switched to the operable state in advance.

(5) In the above-described embodiment, a configuration in which the exterior of the battery 4 for traveling is covered by the housing in a sealed state has been described, but instead of this configuration, a battery of an open exterior design may be used.

### Industrial Applicability

The present invention is applicable not only to a tractor but also to various electric work vehicles such as a rice transplanter, a combine harvester, a construction machine, and the like.

### Description of Reference Signs

4: Battery
10: Front wheel (vehicle body travel device)
11: Rear wheel (vehicle body travel device)
14: Inverter
17: Middle PTO shaft (power takeoff shaft)
18: Rear PTO shaft (power takeoff shaft)
34: Control device
37: Connection section
50: Radiator
51: Blower fan
M: Electric motor

## Claims

1. An electric work vehicle comprising:
an electric motor configured to drive a vehicle body to travel;
a battery chargeable by an external power supply device and configured to supply driving electric power to the electric motor;
a connection section to which a power supply connector of the power supply device is connectable;
a control device configured to control a charge state during charging by the power supply device; and
a temperature detecting means configured to detect a temperature of the battery,
wherein the control device is configured to execute temperature increase control to warm the battery until the temperature of the battery increases to a target temperature prior to charging the battery, in response to the temperature of the battery detected by the temperature detecting means being not higher than a set temperature.

2. The electric work vehicle according to claim 1,
wherein the control device is configured to drive the electric motor to rotate during the temperature increase control.

3. The electric work vehicle according to claim 2, comprising:
a power takeoff shaft driven by motive power supplied from the electric motor and configured to output motive power to an external device,
wherein the control device is configured to drive the power takeoff shaft to rotate using the motive power supplied from the electric motor during the temperature increase control.

4. The electric work vehicle according to claim 2 or 3, comprising:
a hydraulic continuously variable transmission device configured to change speed of motive power supplied from the electric motor and transmit the motive power to a vehicle body travel device,
wherein the control device is configured to operate the hydraulic continuously variable transmission device using the motive power supplied from the electric motor during the temperature increase control.

5. The electric work vehicle according to any one of claims 1 to 4, comprising:
an inverter configured to convert DC power supplied from the battery to AC power and supply the AC power to the electric motor;
a radiator configured to cool a coolant circulating through cooling paths provided in the electric motor and the inverter; and
a blower fan configured to blow air onto the radiator,
wherein the control device is configured to operate the blower fan to ventilate the battery by directing cooling air passing through the radiator toward the battery during the temperature increase control.
